# DEMANDE DE BREVET EUROPEEN

(11) **EP 4 554 231 A1**
(43) Date de publication de la demande: **14.05.2025**
(21) Numéro de dépôt: 24204867.6
(22) Date de dépôt: 07.10.2024
(51) Int. Cl.: H04N 21/262, H04N 21/4402, H04N 21/61, H04N 21/845

(54) **PROCÉDÉ DE GESTION DE L' ACCÈS À DES FICHIERS DE DESCRIPTION ASSOCIÉS À UN CONTENU DIFFUSÉ EN TEMPS RÉEL**

(30) Priorité: 07.11.2023 FR 2312047
(71) Demandeur: Orange, 92130 Issy-les-Moulineaux (FR)
(72) Inventeur: GASTE, Olivier, 92326 Chatillon (FR); MARCHAND, Hervé, 92326 Chatillon (FR)

(57) **Abrégé**

L'invention se rapporte à un procédé de gestion de l'accès à des fichiers de description) associés à un contenu diffusé en temps réel, la lecture requérant une réception, depuis un réseau de communication, de fichiers de description d'un premier type, et d'un deuxième type, caractérisé ce qu'il comprend une réception, suite à une demande d'accès à un contenu, à la fois d'un fichier de description de deuxième type et de fichiers de descriptions de premier type successifs ; et en ce que le fichier de description de deuxième type reçu est complété au fil du temps par au moins une partie des fichiers de description de premier type reçus successivement.

## Description

### Domaine technique

Le domaine de l'invention est celui de la gestion de l'accès à des fichiers de description associés à un contenu multimédia diffusé en temps réel.

L'invention vise tout particulièrement des contenus segmentés, les segments étant accessibles selon plusieurs formats associés à des tailles respectives en octets ayant plus ou moins d'impact sur la bande passante du réseau sur lequel le contenu est téléchargé. L'invention vise tout particulièrement les contenus téléchargés selon une technique dite de téléchargement progressif adaptatif, ou HAS, ou toutes autres techniques de téléchargement utilisant le même principe.

Précisions que les adresses de segments sont incluses dans un fichier de description. Un fichier de description dans le contexte d'un téléchargement progressif adaptatif est un fichier comprenant entre autres des adresses IP des segments à télécharger et lire par un dispositif de lecture. Autrement dit, un fichier de description décrit des segments sous forme d'adresses IP, à charge au dispositif de lecture d'accéder à ces segments via un réseau Internet.

Le dispositif de lecture vise tous les dispositifs de traitement de données équipés de processeurs et capables d'accéder à des segments de contenus au travers d'un réseau, de recevoir les segments depuis un réseau, de décoder les segments reçus et de requérir une restitution des segments décodés par exemple sur un écran intégré au dispositif de lecture ou externe au dispositif de lecture.

### Etat de la technique

Lors d'un accès à un contenu multimédia, un dispositif de lecture émet une requête à destination d'un serveur de contenus en indiquant le contenu multimédia (vidéo et/ou audio) choisi. Le dispositif de lecture reçoit en retour un flux de données numériques relatif à ce contenu. Dans le cadre d'un réseau de communication local, une telle requête peut transiter par une passerelle d'accès au réseau, par exemple une passerelle résidentielle.

Les données reçues sont ensuite décodées par le dispositif de lecture, puis restituées sous la forme d'un affichage de la vidéo correspondante.

La diffusion de contenus numériques sur Internet est souvent basée sur des protocoles client-serveur de la famille HTTP (de l'anglais « Hyper Text Transport Protocol »). En particulier, le téléchargement en mode progressif (en anglais HTTP Adaptative Streaming, d'abréviation HAS), des contenus numériques, aussi appelé « Streaming Adaptatif », permet de transporter et lire les données en temps réel, c'est-à-dire que les données numériques sont transmises sur le réseau et restituées par le dispositif de lecture au fur et à mesure de leur arrivée. Suite à la réception du flux, le dispositif de lecture stocke des données reçues dans une mémoire tampon (buffer en anglais) avant de les restituer. Ce mode de distribution est particulièrement utile quand le débit dont dispose l'utilisateur n'est pas garanti pour le transfert en temps réel de la vidéo.

Le téléchargement progressif adaptatif permet de surcroît de diffuser et recevoir des données suivant différentes qualités correspondant par exemple à différents débits d'encodage respectifs. Ces différentes qualités sont décrites dans un fichier de description, également appelé « Manifest » par l'homme du métier.

Quand un utilisateur accède au flux Live diffusé en http Adaptative Streaming (HAS), le dispositif de lecture récupère reçoit à intervalle régulier, en général toutes les deux secondes, des fichiers de description successivement, appelé ci-après fichiers de description d'un premier type, qui décrivent chacun généralement les soixante dernières secondes du flux (30 segments de 2 secondes) en fournissant des adresses IP (sigle anglosaxon de « Internet Protocol ») de segments correspondant à ces soixante dernières secondes.

En général, les segments vidéo sont choisis de courte durée car on souhaite être au plus proche du flux diffusé en temps réel que l'homme du métier appelle aussi flux Live.

A noter qu'un débit d'encodage est sélectionné parmi les débits disponibles en fonction de la bande passante disponible ou des capacités de stockage et de décodage du dispositif de lecture. Ce type de technique permet de tenir compte des variations de bande passante sur la liaison entre le dispositif de lecture client et le serveur de contenus.

Outre la lecture de contenus, certains dispositifs de lecture offrent une fonction appelée « Start Over » par l'homme du métier (ou « rattrapage » ou « retour au début ») qui permet à un utilisateur qui regarde un contenu diffusé en temps réel (chaine Live) de relire une partie du contenu qui a été diffusé en Live ; cette fonction permet notamment de relire un contenu depuis son début. Par exemple, si un film diffusé en temps réal débute à 21h00 et si l'utilisateur accès au flux Live correspondant en zappant sur la chaine à 21h40, l'utilisateur peut demander, en sélectionnant une commande liée à la fonction dite de rattrapage, à ce que la lecture du contenu reprenne par exemple depuis le début du film. Dans ce cas, on passe d'un mode de lecture en temps réel à un mode de rattrapage.

Dans ce mode de rattrapage, une interface de commandes offre la possibilité de sélectionner une voire plusieurs commandes qui modifient la lecture en cours du contenu diffusé en temps réel. Ces commandes permettent par exemple d'interrompre la lecture, ou de réaliser un saut temporel pour relire le contenu depuis un instant de lecture antérieur et donc de lire le contenu en différé.

Lorsqu'un contenu est lu et que la fonction dite de rattrapage n'est pas proposée, dans ce cas les fichiers de description reçus successivement, appelés dans la suite fichiers de description de premier type, sont ceux décrits ci-dessus. Par contre, lorsque la fonction dite de rattrapage est disponible, le dispositif de lecture reçoit dès le début de la lecture du contenu des fichiers de description spécifiques successivement, appelé ci-dessous fichiers de description de deuxième type, qui décrivent non pas les soixante dernières secondes mais une plage temporelle pus importante très souvent de plusieurs heures, par exemple les quatre dernières heures, de manière à pouvoir relire le contenu depuis un instant situé dans la fenêtre temporelle de quatre heures.

Un tel fichier de description de deuxième type décrivant par exemple les quatre dernières heures est deux cent quarante (240) fois plus volumineux qu'un fichier de description classique. Concrètement, un fichier de description du premier type a une taille de l'ordre de 12ko (description de 30 segments de 2 secondes) et un fichier de description de deuxième type a une taille de l'ordre de 2.8Mo (description de 7200 segments de 2 secondes).

Tout comme le fichier de description de premier type, le fichier de description de deuxième type est téléchargé de manière périodique par exemple toutes les deux secondes. Du fait sa taille énorme, la transmission périodique du fichier de description de deuxième type requiert une bande passante énorme sur le réseau qui peut altérer la qualité de service lors de la restitution du contenu surtout pour des foyers équipés d'une ligne internet avec peu de débit tel qu'une ligne ADSL ; en outre de tels fichiers de description requièrent des temps de traitement (temps de parsing) trop importants pouvant altérer la lecture normale du contenu si la capacité de traitement du dispositif de lecture est peu performante ; ce qui peut provoquer des gels d'image insupportables pour un utilisateur.

L'invention vient améliorer la situation.

### L'invention

A cet effet, selon un premier aspect fonctionnel, l'invention se rapporte à un procédé de gestion de l'accès à des fichiers de description associés à un contenu diffusé en temps réel, , la lecture requérant une réception, depuis un réseau de communication, de fichiers de description d'un premier type ou d'un deuxième type, le procédé étant caractérisé ce qu'il comprend une réception suite à une demande d'accès à un contenu, à la fois d'un fichier de description de deuxième type et de fichiers de description de premier type successifs ; et en ce que le fichier de description de deuxième type reçu est complété au fil du temps par au moins une partie des fichiers de description de premier type reçus successivement.

Selon l'invention, le fichier de description de deuxième type est reçu à un instant donné et complété (ou mis à jour) par le dispositif de lecture à la base de fichiers de description du premier type reçus successivement après cet instant par le dispositif de lecture.

L'invention évite, alors que des commandes requérant une réception d'un fichier de description de deuxième type du fait que la fonction dite de rattrapage est disponible, de recevoir uniquement des fichiers de deuxième type les uns après les autres comme dans l'art antérieur.

Selon l'invention seul fichier de description de deuxième type pourrait être transmis initialement et complété ensuite par les descriptions de segments issus des fichiers de description de premier type reçus successivement. Cependant l'invention n'exclut pas la possibilité de recevoir plusieurs fichiers de description, par exemple à intervalle régulier, suivis par des groupes de fichiers de description de premier type, respectivement.

Du fait de la transmission d'un nombre limité de fichiers de description de deuxième type et de la transmission de fichiers de description du premier type moins volumineux en taille octets qui viendront compléter le fichier de description de deuxième type, il en résulte un gain énorme en bande passante sur le réseau qui véhicule les fichiers de description.

Selon l'invention, un fichier de description de deuxième type est créé hors du dispositif de lecture, au niveau du serveur de contenus ou d'un serveur associé à ce serveur de contenus, et est maintenu à jour sur le dispositif de lecture.

Selon un premier mode de réalisation du procédé, si des fichiers reçus d'un premier type et d'un deuxième type décrivent les mêmes segments, les segments concernés sont lus à la base du fichier de description de premier type reçu. Une entité de gestion vérifie lors de la réception de fichiers de description de deuxième type si un fichier de premier type reçu simultanément décrivent des segments identiques. Ce mode s'appliquera essentiellement aux premiers segments à lire car, comme on le verra ci-après, les premiers segments à lire peuvent être inclus à la fois dans le fichier de deuxième type et dans un fichier de premier type. Ce mode évite d'utiliser un fichier de description de deuxième type pour lire le flux en temps réel car volumineux en taille octets et donc plus long à parcourir. La restitution pourrait être retardée et donc créée un décalage temporel avec le flux Live.

Selon encore un autre mode de mise en oeuvre particulier de l'invention, qui pourra être mis en oeuvre alternativement ou cumulativement avec le précédent, une mise à jour est réalisée à la base de tous les fichiers de description de premier type reçus. L'avantage d'une mise à jour à la base de tous les fichiers de description de premier type est qu'en définitive le fichier de description de deuxième type est complet et qu'une relecture est possible à partir de n'importe quel segment ayant déjà été diffusé.

Selon encore un autre mode de mise en oeuvre particulier de l'invention, qui pourra être mis en oeuvre alternativement ou cumulativement avec les précédents, une mise à jour est réalisée à la base d'une partie fichiers de description de premier type reçus. Du fait de la mise à jour à la base d'une partie des fichiers de description de premier type, le fichier de description de deuxième type est incomplet et donc moins volumineux qu'un fichier de description de deuxième type classique ; ce mode allège donc le traitement CPU dans le dispositif de lecture le dispositif de lecture lit plus vite le fichier de description de deuxième type.

Selon encore un autre mode de mise en oeuvre particulier de l'invention, qui pourra être mis en oeuvre alternativement ou cumulativement avec les précédents, le fichier de description de deuxième type décrit un nombre de de segments constant sur une plage temporelle donnée ; et une mise à jour d'un nombre donné de description de segments via un fichier de description de premier type entraîne une suppression dans le d'un même nombre de description de segments parmi les premiers segments de la plage temporelle. L'entité de gestion gère ainsi en local la taille du fichier de description de deuxième type afin que celle-ci constante.

Selon encore un autre mode de mise en oeuvre particulier de l'invention, qui pourra être mis en oeuvre alternativement ou cumulativement avec les précédents, plusieurs fichiers de description de deuxième type sont reçus successivement à intervalle régulier ; dans cette configuration, réception d'un fichier de description de deuxième type entraîne un effacement du fichier de description du deuxième courant. Grâce à ce mode, le dispositif de lecture ne stocke pas des fichiers de description de deuxième type périmés qui encombreraient l'espace mémoire disponible sur ce dispositif.

Selon encore un autre mode de mise en oeuvre particulier de l'invention, qui pourra être mis en oeuvre alternativement ou cumulativement avec les précédents, le fichier de description de deuxième type reçu décrit un nombre de segments sur une plage temporelle donnée, et en ce que la plage temporelle augmente au fil du temps. Grâce à ce mode, la plage temporelle associée aux segments accessible en mode relecture augmente et permet à un utilisateur de relire un segment sur une plage temporelle plus importante que lorsque la plage temporelle est constante, par exemple quatre heures.

Selon un premier aspect matériel, l'invention se rapporte à une entité de gestion de l'accès à des fichiers de description associés à un contenu diffusé en temps réel, la lecture requérant une réception, depuis un réseau de communication, de fichiers de description d'un premier type et d'un deuxième type, caractérisé ce qu'il comprend un processeur configuré pour réaliser les étapes suivantes :
recevoir suite à une demande d'accès à un contenu, à la fois d'un fichier de description de deuxième type et de fichiers de descriptions de premier type successifs ;
compléter le fichier de description de deuxième type reçu par au moins une partie des fichiers de description de premier type reçus successivement.

Selon un autre aspect matériel, l'invention se rapporte à un dispositif de lecture comprenant une entité de gestion telle que définie ci-dessus.

Selon un autre aspect matériel, l'invention a pour objet un programme d'ordinateur apte à être mis en oeuvre sur une entité de gestion telle que définie ci-dessus, le programme comprenant des instructions de code qui, lorsqu'il est exécuté par un processeur, réalise les étapes du procédé de gestion définies ci-dessus.

Selon un autre aspect matériel, l'invention a pour objet un support de données sur lequel a été mémorisée au moins une série d'instructions de code de programme pour l'exécution d'un procédé de gestion tel que défini ci-dessus.

Selon un deuxième aspect fonctionnel, l'invention se rapporte à un procédé de gestion de la transmission de fichiers de description associés à un contenu diffusé en temps réel la lecture requérant une réception, depuis un réseau de communication, de fichiers de description d'un premier type ou d'un deuxième type, le procédé étant caractérisé ce qu'il comprend une transmission, suite à une demande d'accès à un contenu, d'un fichier de description de deuxième type et des fichiers de descriptions de premier type successivement.

On verra dans la suite qu'un fichier de description de deuxième type peut être transmis seul ou simultanément avec un fichier de description de premier type.

Selon un mode de réalisation particulier de la deuxième entité, le fichier de description de deuxième type est transmis après une durée donnée.

Selon un mode de réalisation particulier de la deuxième entité, qui pourra être mis en oeuvre alternativement ou cumulativement avec le précédent, le fichier de description de deuxième type est transmis après un nombre donné de transmission de fichiers de description de premier type.

Les deux modes qui précèdent couvrent le fait que le fichier de description de deuxième type n'est pas forcément le premier fichier de description transmis suite à la réception de la requête d'accès au contenu en cours de diffusion ; au contraire, le fichier de description de deuxième type est transmis plus tard, soit après une durée donnée, soit après un nombre donné de fichier de description de premier type transmis. Ces deux modes partent du principe qu'un utilisateur accédant au contenu ne requiert pas en général une relecture dans les premières minutes. La durée donnée ou le nombre donné visés ci-dessus seront d'ailleurs choisis judicieusement pour prendre en compte ce temps qu'un utilisateur prend avant de relire un contenu.

Selon un autre aspect matériel, l'invention se rapporte à une entité de gestion, dite deuxième entité, de la transmission de fichiers de description associés à un contenu diffusé en temps réel, la lecture requérant une transmission, via un réseau de communication, de fichiers de description d'un premier type ou d'un deuxième type, caractérisé ce qu'il comprend un processeur configuré pour réaliser les étapes suivantes :
recevoir une requête d'accès à un contenu,
suite à la réception d'une commande d'accès à un contenu, à transmettre à la fois un fichier de description de deuxième type et des fichiers de descriptions de premier type successivement.
Selon un autre aspect matériel, l'invention se rapporte à un serveur de contenus comprenant une deuxième entité telle que définie ci-dessus.
Selon un autre aspect matériel, l'invention se rapporte à un programme d'ordinateur apte à être mis en oeuvre sur une deuxième entité de gestion telle que définie ci-dessus, le programme comprenant des instructions de code qui, lorsqu'il est exécuté par un processeur, réalise les étapes du procédé définies en liaison avec le deuxième aspect fonctionnel.

Enfin, selon un autre aspect matériel, l'invention se rapporte à un support de données sur lequel a été mémorisée au moins une série d'instructions de code de programme pour l'exécution d'un procédé de gestion de la transmission de fichiers de description.

Les supports visés ci-dessus peuvent être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique, par exemple un disque dur. D'autre part, un support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés sur lesquels :
[Fig 1] représente une architecture de téléchargement progressif sur Internet basée sur l'utilisation du streaming adaptatif selon un mode de réalisation du procédé de l'invention ;
[Fig 2] illustre de façon schématique la structure matérielle d'un serveur apte à transmettre des fichiers de description ;
[Fig 3] illustre de façon schématique la structure matérielle d'un dispositif de lecture apte à lire des flux multimédias en temps réel ;
[Fig 4] illustre un contenu et les segments disponibles pour ce contenu.
[Fig 5] illustre un mode de réalisation du procédé de l'invention ; cette figure illustre la communication entre le dispositif de lecture et le serveur de contenus et le type de fichiers de description transmis en fonction du temps. Dans ce mode, le fichier de description de deuxième type est transmis en premier suite à la demande d'accès à un contenu ; les fichiers de premier type sont transmis ensuite.
[Fig 6] illustre un autre mode de réalisation pouvant être mois en oeuvre alternativement ou cumulativement avec le précédent ; dans ce mode, le fichier de description de deuxième type est transmis après transmission d'un certain nombre de fichiers de premier type.
[Fig 7] illustre un autre mode dans lequel le fichier de description de deuxième type est transmis plusieurs fois, par exemple régulièrement ; chaque transmission étant suivie d'une transmission de fichiers de description de premier type.

### Description détaillée de modes de réalisation de l'invention

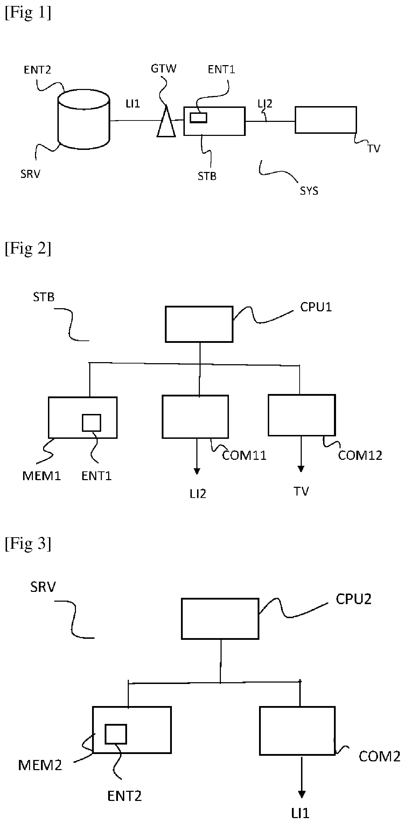

La figure 1 représente un système informatique SYS dans lequel est mis en oeuvre un réseau de diffusion de contenus appelé CDN (Content Distribution Network) par l'homme du métier depuis lequel sont transmis des contenus à destination de dispositifs clients ou dispositifs de lecture de contenus et des fichiers de description associés aux contenus multimédias.

Dans notre exemple, le système comprend un seul dispositif de lecture STB. Cependant l'invention s'applique à un nombre quelconque de dispositifs de lecture.

Le dispositif de lecture est par exemple un dispositif de lecture numérique tel qu'un décodeur.

Le contenu multimédia visé ici est un contenu vidéo correspondant par exemple à une chaîne de télévision sur laquelle sont diffusés des programmes télévisés dits Live c'est-à-dire diffusés en temps réel. Le contenu en question en diffusé en mode multicast.

Dans notre exemple, le dispositif de lecture STB est connecté à un terminal de restitution TV tel qu'une télévision.

Dans notre exemple, le dispositif de lecture STB est connecté sur un port du dispositif de restitution TV ; le dispositif de lecture dispositif de lecture STB et le dispositif de restitution TV pourrait aussi former un seul et unique dispositif.

Dans notre exemple, le dispositif de lecture STB est situé dans un réseau local LAN (sigle anglosaxon de « Local Area Network ») géré par une passerelle domestique GTW. Le contexte du réseau local est donné à titre d'exemple et pourrait être transposé aisément à un réseau Internet de type « best effort », un réseau d'entreprise, etc. On verra dans la suite que le dispositif de lecture STB comprend une première entité de gestion ENT1.

La passerelle GTW est apte à communiquer via un réseau de télécommunication LI1 tel qu'un réseau étendu WAN connu de l'homme du métier.

Le système informatique SYS met en oeuvre un réseau de diffusion de contenus appelé CDN (Content Distribution Network) par l'homme du métier depuis lequel des contenus sont transmis à destination de dispositifs clients ou dispositifs de lecture de contenus STB.

Le réseau CDN est constitué de serveurs reliés en réseau dans le réseau étendu ; ces serveurs coopèrent afin de mettre des contenus multimédias à disposition des utilisateurs en mode unicast. Afin de simplifier l'exposé de l'invention, un seul serveur de contenus SRV sera représenté sur la figure 1 pour représenter le CDN. Le serveur de contenus SRV se trouve, dans notre exemple, dans le réseau étendu WAN.

Le serveur de contenus SRV reçoit par exemple des chaînes de contenus de télévision numérique en provenance d'un réseau de télévision diffusée (non représenté), et les met à disposition en temps réel à des terminaux clients, ici le dispositif de lecture STB.

Les contenus CNT sont mis à disposition en mode unicast dans un format donné. Un tel contenu CNT est, par exemple, un contenu téléchargé en mode de streaming adaptatif. La norme MPEG-DASH (pour l'anglais "Dynamic Adaptive Streaming over HTTP", en français « diffusion en flux adaptatif dynamique sur HTTP ») est un standard de format de diffusion audiovisuelle sur Internet ; ce standard se base sur la préparation du contenu en différentes représentations de qualité et débit variables, découpées en segments de courte durée (de l'ordre de quelques secondes), également appelés « chunks » par l'homme du métier. Chacun de ces segments est rendu disponible individuellement au moyen d'un protocole d'échange entre le terminal de restitution et le serveur fournisseur de contenus multimédias. Le protocole principalement ciblé est le protocole HTTP, mais d'autres protocoles (par exemple FTP) peuvent également être utilisés. L'organisation des segments et les paramètres associés sont publiés dans un fichier de description au format XML. Nous ne rentrerons pas plus dans les détails de ce mode de téléchargement car sans intérêt pour l'exposé de l'invention.

Un exemple de fichier de description ou « manifest » (MPD) conforme à la norme MPEG-DASH et comportant la description de contenus disponibles dans trois qualités différentes (N1 = 512 kb/s, N2 = 1024 kb/s, N3 = 2048 kb/s) des contenus fragmentés est présenté en Annexe 1. Ce fichier de description simplifié décrit des contenus numériques dans une syntaxe XML (de l'Anglais « eXtended Markup Language»), comprenant une liste de contenus sous forme de segments classiquement décrits entre une balise ouvrante (<SegmentList>) et une balise fermante (</SegmentList>). La découpe en segments permet notamment de s'adapter finement aux fluctuations de la bande passante. Chaque segment correspond à une certaine durée (champ « duration ») avec plusieurs niveaux de qualité et permet de générer leurs adresses (URL - Uniform Resource Locator). Cette génération est faite dans cet exemple à l'aide des éléments « BaseURL » (« HTTP://server.com») qui indique l'adresse du serveur de contenus et « SegmentURL » qui liste les parties complémentaires des adresses des différents segments :
- « C1_512kb_1.mp4 » pour le premier fragment du contenu « C1 » à 512 kilobits par seconde (« kb ») au format MPEG-4 (« mp4 »),
- « C1_512kb_2.mp4 » pour le second fragment,
- etc.

La figure 2 le serveur SRV est également équipé d'au moins un processeur CPU2 et de mémoires MEM2 pour la réalisation de traitement informatique. Le serveur est également équipé d'une entité de gestion ENT2, dite deuxième entité de gestion, apte à gérer la transmission d'un contenu et du fichier de description associés au contenu depuis le serveur SRV à destination d'un ou plusieurs dispositifs de lecture, ici vers le dispositif de lecture STB. Le serveur SRV communique avec la passerelle GTW via réseau WAN. Le serveur comporte, la communication avec le réseau WAN, un module de communication référencé COM2 sur la figure 3. On s'intéressera essentiellement dans la suite à la transmission du fichier de description plutôt que de la transmission des segments.

La figure 3 représente une architecture d'un dispositif de lecture STB. Ce dispositif STB comprend, classiquement, des mémoires MEM1 associées à un processeur CPU1. Les mémoires peuvent être de type ROM (de l'anglais « Read Only Memory ») ou RAM (de l'anglais « Random Access Memory ») ou encore Flash.

Le dispositif de lecture STB peut transmettre un contenu à restituer au dispositif de restitution TV via un module de communication COM12. Ce module COM12 est par exemple une liaison HDMI.

Le dispositif de lecture STB communique avec la passerelle via un module Ethernet pour une communication locale avec fils ou via un module radio de type WiFi pour une communication locale sans fils avec la passerelle résidentielle GTW. Le module en question est référencé CMO11 sur la figure 2.

Le dispositif de lecture STB comprend un module de téléchargement en mode streaming HAS (non représentée) apte à gérer le téléchargement de segments du contenu. Le dispositif de lecture STB comprend également une entité de gestion ENT1, dite deuxième entité de gestion dans la suite apte à lire un fichier de description construit spécifiquement lors d'une lecture en mode rattrapage comme cela est expliqué ci-dessous. Le module de téléchargement HAS et la première entité ENT1 peuvent ne former qu'une seule entité auquel cas le module HAS est intégré à la première entité ENT1 ou être séparées l'une de l'autre.

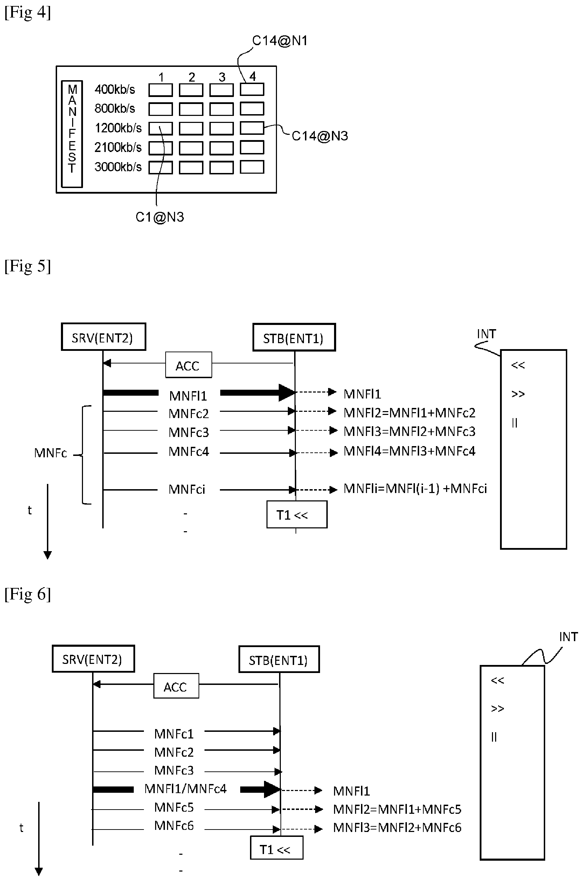

On présente désormais, en relation avec la figure 4, une vue schématique d'un contenu principal C1 découpé en segments et stocké dans le serveur de contenus SRV. Plus précisément, le serveur de contenu HAS expose une vidéo C1 sous forme de segments C1i@Nj encodés à différents débits d'encodage Nj, où l'indice i désigne un identifiant temporel du segment C1i@Nj.

Le module de téléchargement HAS, appelé mode de téléchargement classique ci-dessous, du dispositif de lecture STB est chargé de venir récupérer les segments auprès du serveur de contenu HAS en choisissant la qualité vidéo Nj en fonction de la ressource réseau disponible. On ne décrit pas ici plus en détail la façon dont le module de téléchargement HAS choisit le débit d'encodage du prochain segment vidéo à télécharger. On rappelle que, le plus souvent, le principe général de tels algorithmes repose sur le téléchargement d'un premier segment au débit d'encodage le plus faible proposé dans le fichier de description, et sur l'évaluation du temps de récupération de ce premier segment. Sur cette base, le module de téléchargement HAS évalue si, en fonction de la taille du segment et du temps mis pour le récupérer, les conditions réseau permettent de télécharger le segment suivant à un débit d'encodage plus élevé. Certains algorithmes reposent sur une augmentation progressive du niveau de qualité des segments de contenu téléchargés ; d'autres proposent des approches plus risquées, avec des sauts dans les niveaux des débits d'encodage des segments successifs.

Dans le cas classique, si un segment vidéo dure trois secondes, la récupération du segment par le module de téléchargement HAS ne doit pas excéder 3 secondes, afin de permettre une restitution sans interruption du contenu par le dispositif de lecture STB. Il convient donc pour le module de téléchargement HAS d'opérer le meilleur compromis entre une qualité de restitution, et donc un débit d'encodage, aussi élevés que possible, et le temps de téléchargement du segment, qui doit être suffisamment faible pour permettre une restitution en continu sur le téléviseur TV.

Dans un premier temps, le module HAS récupère le fichier de description qui correspond au contenu vidéo C1 afin de découvrir les segments disponibles du contenu vidéo C1, et les différentes qualités vidéo Nj associées. Dans l'exemple de la figure 4, le contenu C1 est par exemple proposé sous forme de segments de durée 3s, avec un premier débit d'encodage N1 = 400 kb/s, un deuxième débit d'encodage N2 = 800 kb/s, un troisième débit d'encodage N3 = 1200 kb/s, etc.

Dans un mode de fonctionnement normal, non illustré sur la figure 4, le module HAS opère le téléchargement par exemple, des segments successifs C11@N1 (soit le premier segment temporel à un débit d'encodage de 400 kb/s), puis C12@N3 (soit le deuxième segment temporel à un débit d'encodage de 1200 kb/s), puis C13@N3 (soit le troisième segment temporel à un débit d'encodage de 1200 kb/s), etc.

Les différents segments téléchargés par le module de téléchargement HAS sont ensuite transmis à un module d'affichage apte à requérir un affichage sur le téléviseur TV.

L'algorithme mis en oeuvre par le module de téléchargement HAS pour déterminer quel segment à quel débit d'encodage doit être téléchargé en mode de fonctionnement normal peut être l'un des algorithmes déjà existants de l'art antérieur. Cet algorithme ne sera donc pas décrit ici plus en détail.

Il arrive parfois de manquer le début d'un programme télévisé (film, série, etc.). Une fonction appelée « lire du début » ou « rattrapage » (appelée également « Start Over » ou « Restait » par l'homme du métier) permet de reprendre, à tout moment, le programme en cours de diffusion à un instant antérieur à l'instant courant ; par exemple la lecture du contenu peut être reprise depuis son commencement. Par exemple, si un film débute à 21h00 et si l'utilisateur zappe sur la chaine à 21h40, il peut demander à ce que la lecture du contenu reprenne depuis le début du film. Dans ce cas, on passe donc d'un mode de lecture à un contenu en temps réel à un mode de lecture en différé.

Quand cet utilisateur accède à un flux Live diffusé en temps réel (contenu Live) en http Adaptative Streaming (HAS), le dispositif de lecture STB, sous-entendu l'entité HAS installé sur ce dispositif, récupère en général toutes les 2 secondes un fichier de description, ci-après appelé fichier de description de premier type, qui décrit généralement les soixante dernières secondes du flux (30 segments de 2 secondes). On peut alors décider de stocker en mémoire (buffer) une certaine partie du flux (jusqu'à 60 secondes au maximum donc) ; les segments vidéo sont de courte durée car on souhaite être au plus proche du vrai Live c'est-à-dire de l'événement filmé, par exemple un match de Football. C'est également pour cette raison qu'on récupère le fichier de description toutes les deux secondes et qu'on limite la profondeur de buffer en général autour de quinze secondes afin de ne pas engendrer un décalage trop important entre le match de Football et sa restitution sur un écran.

Une interface de commandes (les symboles le plus souvent présents sur une télécommande sont « << » pour le retour en arrière, « >> » pour l'avance rapide et « II » pour la commande Pause) permet d'agir sur la lecture courante du contenu Live. Des commandes en particulier permettent d'activer le mode rattrapage (ou start over).

De manière à assurer une exécution d'une commande de l'interface de commandes, par exemple la commande de retour en arrière < <, le fichier de description qui est récupéré ne décrit plus les soixante dernières secondes mais une fenêtre temporelle bien supérieure aux soixante secondes. La fenêtre temporelle en question peut concerner les quatre dernières heures ; dans ce cas, on peut relire le contenu depuis un instant situé dans la fenêtre temporelle.

Ce fichier de description, appelé fichier de description de deuxième type, décrivant les quatre dernières heures est transmis périodiquement (généralement toutes les deux secondes) indépendamment du fait que le mode rattrapage est utilisé ou pas.

Un fichier de description de premier type sera référencé MNFc (l'indice « c » désignant un fichier de description « court ») et un fichier de description de deuxième type sera référencé MNFI (l'indice « I » désignant un fichier de description « long »).

On comprend donc ici que la taille du fichier de description du deuxième type est plus importante que la taille du fichier de description du premier type.

Selon l'invention, lorsqu'un accès est demandé au contenu, le serveur transmet en retour un fichier de description de deuxième type MNFI et des fichiers de premier type MNFc; la première entité ENT1, après réception du fichier de description de deuxième type MNFI, se charge de mettre à jour le fichier de description de deuxième type reçu avec tout ou partie des fichiers de description de premier type reçus successivement.

Sur les figures 5 à 7 décrites ci-dessous, afin de distinguer les fichiers de description de premier et deuxième type, le flux transportant les fichiers de description de deuxième type seront représentés avec une flèche avec une épaisseur plus importante que les flux transportant les fichiers de description de premier type MNFc.

La figure 5 illustre un mode de réalisation du procédé de l'invention. Sur cette figure 5, sont représentés deux axes verticaux correspondants respectivement à deux entités à savoir la première entité ENT1 présente sur le dispositif de lecture STB et la deuxième entité ENT2 présente sur le serveur SRV. La figure 5 illustre les échanges de données qui ont lieu entre le dispositif de lecture STB et le serveur de contenu SRV.

A droite des deux axes, un cadre est représenté pour montrer quelles commandes sont disponibles via une interface de commandes INT tout au long de la lecture. On y trouve des commandes telles que
- une commande de retour « << »
- une commande Pause « II »
- une commande d'avance rapide « >> « (cette commande ne peut être utilisée alors que la lecture est déjà en différée)

A noter que sur cette figure 5 seule une partie des messages utiles à la compréhension de l'invention sont illustrés. Par exemple, après réception d'un fichier de description par le dispositif de lecture STB, ce dernier requiert en principe un accès aux segments décrits dans ce fichier de description reçu ; nous avons choisi de ne pas faire apparaître ces messages d'accès car sans intérêt pour l'exposé de l'invention.

L'exécution des commandes données à titre d'exemple ci-dessus entraîne une lecture différée du contenu Live en cours de diffusion. L'interface peut bien sûr comprendre d'autres commandes n'ayant pas un tel impact sur la lecture courante ; une telle commande est par exemple une commande d'affichage d'informations sur le contenu en cours de lecture.

Les commandes dont l'exécution entraîne une lecture en différé du contenu nécessitent une description de segments ayant été diffusés dans le passé ; un fichier de premier type qui ne décrit que les derniers segments produits liés à la diffusion en temps réel n'est donc pas suffisant. La première entité ENT1 va donc se charger de récupérer au moins un fichier de description de deuxième type MNFl1 pour pouvoir exécuter une commande correctement.

Les étapes d'un mode de réalisation sont les suivantes ; on suppose ici que l'interface de commandes comprend au moins une commande entraînant une lecture différée et requérant donc des fichiers de description du deuxième type ; on suppose également que l'utilisateur accède à une chaîne « Live » à 10h et que le programme en question à commencer à 9h donc depuis une heure.

Lors d'une première étape, la première entité ENT1 requiert un accès ACC à un contenu multimédia.

Lors d'une deuxième étape, le serveur SRV et donc la deuxième entité ENT2 reçoit la requête.

Lors d'une troisième étape, selon un mode de réalisation, la deuxième entité ENT2 requiert systématiquement la transmission initiale, d'un premier fichier de description de deuxième type MNFl1 décrivant à la fois les segments relatifs au Live et les segments qui ont été diffusés depuis le début de programme il y a quatre heures.

Lors de cette étape, dans notre exemple, le serveur SRV peut aussi transmettre, indépendamment du fichier de description de deuxième type, un fichier de description d'un premier type décrivant les segments relatifs au Live.

Si des fichiers reçus d'un premier type et d'un deuxième type sont reçus et décrivent les mêmes segments, les segments concernés sont de préférence lus à la base du fichier de description de premier type reçu, ce afin de gagner du temps.

Supposons que seul le fichier de description de deuxième type MNFl1 est transmis initialement, ce fichier comprenant la description des segments produits sur le serveur liés au contenu en cours de diffusion en temps réel ; Dans ce cas, les premiers segments sont lus grâce à ce fichier de description de deuxième type MNFI1.

La deuxième entité ENT2 transmet ensuite successivement des fichiers de descriptions de premier type MNFc2, MNFc3,...MNFci (l'indice « i » désignant le i-ème fichier de description). Le dispositif de lecture STB reçoit ces fichiers de descriptions de premier type MNFc2, MNFc3,...MNFci et les lit les uns après les autres pour accéder aux segments.

Dans notre exemple, suite à chaque réception d'un fichier de description de premier type, le fichier de description de deuxième type MNFl1 est mis à jour pour inclure les adresses de segments reçus.

On comprend qu'à ce stade, du fait de la mise à jour du fichier de description de deuxième type au fil du temps, une demande d'exécution d'une commande de relecture du flux peut être menée à bien grâce à ce fichier de description de deuxième type mis à jour.

Selon un mode de réalisation, le fichier de description de deuxième type MNFI1 décrit un nombre de segments constant sur une plage temporelle donnée, par exemple un nombre de segments dont la lecture couvre quatre heures de diffusion ; dans cette configuration, une mise à jour d'un nombre donné de description de segments via un fichier de description de premier type entraîne une suppression d'un même nombre de description de segments parmi les premiers segments de la plage temporelle.

Selon une autre variante possible de ce mode, le fichier de description de deuxième type MNFl1 peut aussi être mis en jour sans limite de taille. Dans cette configuration, la plage temporelle d'accès aux segments passés augmente dans le temps ; initialement d'une durée de quatre heures dans notre exemple, cette durée augmente.

En référence à cette autre variante, on pourra néanmoins fixer une taille maximale pour ne pas surcharger les serveurs mémorisant les contenus.

Dans notre exemple les fichiers de description du premier type MNFc sont transmis à intervalle régulier (par exemple toutes les 2 secondes). A noter que dans notre exemple, les différents fichiers sont bien évidemment différents du fait qu'ils décrivent des segments différents.

A noter que la régularité des envois du fichier de description n'est pas essentielle ; d'autres façons de transmettre le fichier peuvent être envisagées.

Comme vu précédemment, le premier fichier de description de deuxième type MNFl1 est complété par les adresses IP des segments décrits dans les fichiers de description du premier type reçus successivement. Le premier fichier de description de deuxième type complété par le fichier de description MNFc1 devient MNFl2 ; Le premier fichier de description de deuxième type MNFl2 complété par le fichier de description MNFc2 devient MNFl3, et ainsi de suite.

En référence à la figure 5, on suppose qu'à un instant T1, un utilisateur sélectionne la commande retour en arrière << sur sa télécommande.

Le décodeur STB reçoit la commande <<. La première entité ENT1 reçoit la commande et requiert son exécution par le processeur. Le module de téléchargement HAS peut alors accéder aux segments demandés.

La figure 6 illustre un autre mode de réalisation pouvant être réalisé en association ou en combinaison avec le mode décrit en liaison avec la figure 5.

Sur cette figure 6, sont représentés les mêmes deux axes verticaux décrits en référence à la figure 5 correspondants respectivement à deux entités à savoir la première entité ENT1 présente sur le dispositif de lecture STB et la deuxième entité ENT2 présente sur le serveur SRV. La figure 6 aussi illustre les échanges de données qui ont lieu entre le dispositif de lecture STB et le serveur de contenu SRV. A droite des deux axes un cadre est représenté pour montrer quelles commandes sont disponibles via une interface de commandes INT tout au long de la lecture. On y trouve des commandes telles que
- une commande de retour « << »
- une commande Pause « II »
- une commande d'avance rapide « >> « (cette commande ne peut être utilisée alors que la lecture est déjà en différée)

Dans ce mode, à la différence du mode décrit sur la figure 5, le fichier de description de deuxième type reçu initialement est reçu plus tard, par exemple après une durée donnée suite à la demande d'accès ACC ou après une transmission d'un nombre donné de fichiers de premier type.

Dans ce mode, le serveur SRV retarde la transmission du fichier de description de deuxième type soit après une durée donnée, soit après un nombre donné de fichier de description de premier type transmis. Ces deux modes partent du principe qu'un utilisateur accédant au contenu ne requiert pas en général une relecture dans les premières minutes. La durée donnée ou le nombre donné visés ci-dessus seront d'ailleurs choisis judicieusement pour prendre en compte ce temps qu'un utilisateur prend avant de relire un contenu.

Dans notre exemple, en référence à la figure 5, le fichier de deuxième type MNFl1 est transmis après le troisième fichier de description de premier type MNFc3. Dans notre exemple, ce fichier de deuxième type est transmis en même temps que le quatrième fichier de premier type MNFc4 ; cependant, ces deux fichiers auraient pu aussi être transmis l'un après l'autre.

A réception, la première entité ENT1 mémorise le fichier de description de deuxième type MNFl1 en vue d'une éventuelle demande d'exécution d'une commande de relecture du contenu depuis un instant antérieur. La première entité ENT1 poursuit également la lecture des segments à la base du fichier de premier type reçu MNFc4 et ainsi de suite.

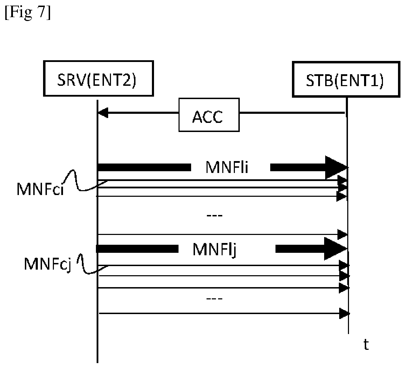

La figure 7 illustre un autre mode de réalisation pouvant être réalisé en association ou en combinaison avec les modes décrits ci-dessus en liaison avec les figures 5 et 6.

Dans ce mode, plusieurs fichiers de description de deuxième type MNFI1/...MNFi/MNFj/... (i et j sont des entiers et j>i) sont reçus successivement à intervalle régulier. Des transmissions de fichiers de description de premier type s'intercallent entre les transmissions de fichier de description de deuxième type.

En outre, dans ce mode, une réception d'un fichier de description de deuxième type MNFlj entraîne un effacement du fichier de description du deuxième courant MNFlj utilisé par la première entité ENT1 ; suite à l'effacement, le dernier fichier de deuxième type reçu MNFlj est mis à jour par les différents fichiers de description de premier type MNFci (i= 1,2,4, etc.) reçus par la suite successivement et est utilisé pour une éventuelle relecture du contenu.

Comme vu précédemment, un fichier de description d'un deuxième type MNFli est mis à jour par des fichier de description de premier type MNFci (i=1,2,4, etc.) reçus par la suite successivement.

Précisons enfin ici aussi ici que le terme « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

### ANNEXE 1 : exemple de fichier manifest

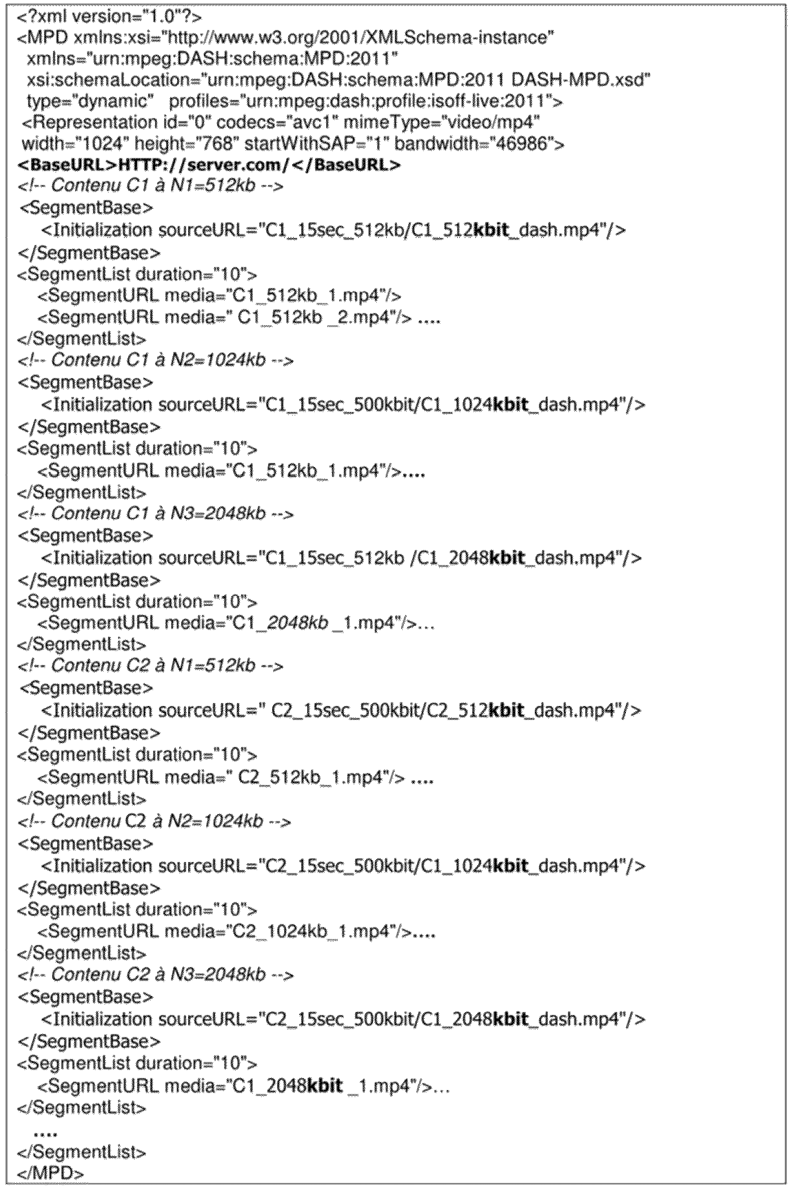

## Revendications

1. Procédé de gestion de l'accès à des fichiers de description (MNFc,MNFI) associés à un contenu diffusé en temps réel, , la lecture requérant une réception, depuis un réseau de communication, de fichiers de description d'un premier type (MNFc) ou d'un deuxième type (MNFI), le procédé étant caractérisé ce qu'il comprend une réception, suite à une demande d'accès à un contenu, à la fois d'un fichier de description de deuxième type et de fichiers de descriptions de premier type successifs ; et en ce que le fichier de description de deuxième type reçu est complété au fil du temps par au moins une partie des fichiers de description de premier type reçus successivement.

2. Procédé de gestion selon la revendication 1, **caractérisé en ce que** si des fichiers reçus d'un premier type et d'un deuxième type décrivent les mêmes segments, les segments concernés sont lus à la base du fichier de description de premier type reçu.

3. Procédé de gestion selon la revendication 1, **caractérisé en ce que** plusieurs fichiers de description de deuxième type sont reçus successivement à intervalle régulier et **en ce qu'**une réception d'un fichier de description de deuxième type entraîne un effacement du fichier de description du deuxième type courant.

4. Procédé de gestion selon la revendication 1, **caractérisé en ce qu'**une mise à jour est réalisée à la base de tous les fichiers de description de premier type reçus.

5. Procédé de gestion selon la revendication 1, **caractérisé en ce qu'**une la mise à jour est réalisée à la base d'une partie des fichiers de description de premier type reçus.

6. Procédé de gestion selon la revendication 1, **caractérisé en ce que** le fichier de description de deuxième type décrit un nombre de segments constant sur une plage temporelle donnée, et **en ce qu'**une mise à jour d'un nombre donné de description de segments via un fichier de description de premier type entraîne une suppression dans le fichier de description de deuxième type d'un même nombre de description de segments parmi les premiers segments de la plage temporelle.

7. Procédé de gestion selon la revendication 1, **caractérisé en ce que** le fichier de description de deuxième type reçu décrit un nombre de segments sur une plage temporelle donnée, et **en ce que** la plage temporelle augmente au fil du temps.

8. Entité de gestion (ENT1) de l'accès à des fichiers de description (MNFc,MNFI) associés à un contenu diffusé en temps réel, la lecture requérant une réception, depuis un réseau de communication, de fichiers de description d'un premier type (MNFc) et d'un deuxième type (MNFI), caractérisée ce qu'il comprend un processeur configuré pour réaliser les étapes suivantes :
a. recevoir suite à une demande d'accès à un contenu, à la fois d'un fichier de description de deuxième type (MNGI) et de fichiers de descriptions de premier type successifs (MNFc1,MNFc2, etc.);
b. compléter le fichier de description de deuxième type (MNFI) reçu par au moins une partie des fichiers de description de premier type (MNFc) reçus successivement.

9. Dispositif de lecture (STB) comprenant une entité de gestion (ENT1) telle que définie dans la revendication 8.

10. Programme d'ordinateur apte à être mis en oeuvre sur une entité de gestion (ENT) telle que définie dans la revendication 8, le programme comprenant des instructions de code qui, lorsqu'il est exécuté par un processeur, réalise les étapes du procédé définies dans la revendication 1.

11. Support de données sur lequel a été mémorisée au moins une série d'instructions de code de programme pour l'exécution d'un procédé selon la revendication 1.

12. Procédé de gestion de la transmission de fichiers de description associés à un contenu diffusé en temps réel, la lecture requérant une réception, depuis un réseau de communication, de fichiers de description d'un premier type ou d'un deuxième type, le procédé étant caractérisé ce qu'il comprend une transmission, suite à une demande d'accès à un contenu, d'un fichier de description de deuxième type et des fichiers de description de premier type successivement.

13. Procédé de gestion de la transmission de fichiers de description selon la revendication 12, **caractérisé en ce que** le fichier de description de deuxième type est transmis après une durée donnée.

14. Procédé de gestion de la transmission de fichiers de description selon la revendication 12, **caractérisé en ce que** le fichier de description de deuxième type est transmis après un nombre donné de transmission de fichiers de description de premier type.

15. Entité de gestion (ENT2) de la transmission de fichiers de description associés à un contenu diffusé en temps réel, la lecture requérant une transmission, via un réseau de communication, de fichiers de description d'un premier type ou d'un deuxième type, caractérisée ce qu'il comprend un processeur configuré pour réaliser les étapes suivantes
a. recevoir une requête d'accès à un contenu,
b. suite à la réception d'une commande d'accès à un contenu, transmettre un fichier de description de deuxième type et des fichiers de descriptions de premier type successivement.

16. Serveur de contenus (SRV) **caractérisé en ce qu'**il comprend une entité (ENT2) telle que définie dans la revendication 15.

17. Programme d'ordinateur apte à être mis en oeuvre sur une entité de gestion (ENT) telle que définie dans la revendication 15, le programme comprenant des instructions de code qui, lorsqu'il est exécuté par un processeur, réalise les étapes du procédé définies dans la revendication 12.

18. Support de données sur lequel a été mémorisée au moins une série d'instructions de code de programme pour l'exécution d'un procédé selon la revendication 12.
